# EUROPEAN PATENT APPLICATION

(11) **EP 2 688 024 A1**
(43) Date of publication of application: **22.01.2014**
(21) Application number: 13171873.6
(22) Date of filing: 13.06.2013
(51) Int. Cl.: G06Q 20/32

(54) **Method For Online Payment, And System And Electronic Device For Implementing The Same**

(30) Priority: 16.07.2012 TW 101125538; 18.10.2012 TW 101138454
(71) Applicant: Yang, Chien-Kang, Taipei City 10682 (TW)
(72) Inventor: Yang, Chien-Kang, Taipei City 10682 (TW)
(74) Representative: Robson, Aidan John

(57) **Abstract**

In a method for online payment, a seller-end electronic device (20) allows a user input of an account number and payment information associated with a transaction, and transmits the same to a transaction platform (30). A buyer-end electronic device (10) transmits a payment authorization signal to the transaction platform (30). The transaction platform (30) transmits the payment information to the buyer-end electronic device (10) . The buyer-end electronic device (10) allows input of a personal identification number (PIN) , and transmits a confirm signal to the transaction platform (30). The transaction platform (30) is configured to communicate with a bank terminal (200) to process a payment for the transaction.

## Description

The invention relates to a method for processing an online payment, in order to provide a relatively higher security.

Nowadays, a number of ways are available to execute a payment for a typical transaction. For example, the payment can be done using physical money, such as coins and/or banknotes, or can be done using plastic money (in the form of a physical card, e.g., a credit card, a debit card, etc.). In addition to conventional face-to-face transactions, such payments can be also processed online.

It is known, however, that the current ways of executing the payment may have respective drawbacks. Physical money can be inconvenient to carry for a consumer, and for a party providing product and/or service in exchange for money, there is always a risk of loss attributed to receipt of counterfeit money. Plastic money is only usable in a limited environment that supports usage of plastic money (e. g. , that accepts credit cards and that is equipped with a card reader), and may have various security problems, such as credit card fraud. Online transaction also involves plastic money, and involves online transmission of highly important information such as a card number, an expiration date and a card security code (CRC). Such information may be intercepted by a malicious third party during transmission, thereby exposing a holder of the credit card to risk of monetary loss.

Therefore, the object of the present invention is to provide a method that is for online payment, and that does not involve physical cards to implement.

Accordingly, a method for online payment of the present invention is to be implemented by an online payment processing system. The online payment processing system includes a buyer-end electronic device, a seller-end electronic device and a transaction platform coupled to the buyer-end electronic device, the seller-end electronic device and a bank terminal. The method comprises the following steps of:
(a) configuring the seller-end electronic device to receive a buyer account number associated with the buyer-end electronic device and payment information associated with a transaction between users of the buyer-end and seller-end electronic devices;
(b) configuring the seller-end electronic device to transmit the payment information and the buyer account number to the transaction platform;
(c) configuring the buyer-end electronic device to transmit a payment authorization signal to the transaction platform, the payment authorization signal including the buyer account number;
(d) when it is determined by the transaction platform that the buyer account numbers, which are received respectively from the seller-end electronic device in step (b) and from the buyer-end electronic device in step (c), correspond to each other, configuring the transaction platform to transmit the payment information to the buyer-end electronic device;
(e) configuring the buyer-end electronic device to instruct the user of the buyer-end electronic device to input a personal identification number (PIN);
(f) configuring the buyer-end electronic device to transmit a confirm signal to the transaction platform when it is determined by the buyer-end electronic device that the PIN received in step (e) is correct; and
(g) configuring the transaction platform to communicate with the bank terminal to process a payment for the transaction according to the buyer account number and the payment information.

Another obj ect of the present invention is to provide an online payment processing system configured to execute the aforementioned method in order to process a payment for an online transaction.

Accordingly, an online payment processing system of the present invention comprises a buyer-end electronic device, a seller-end electronic device, and a transaction platform coupled to the buyer-end and seller-end electronic devices.

The seller-end electronic device is configured to receive a buyer account number associated with the buyer-end electronic device and payment information associated with a transaction between users of the buyer-end and seller-end electronic devices, and to transmit the payment information and the buyer account number to the transaction platform.

The buyer-end electronic device is configured to transmit a payment authorization signal that includes the buyer account number to the transaction platform.

The transaction platform is configured to determine that whether the buyer account numbers, which are received respectively from the seller-end electronic device and the buyer-end electronic device, correspond to each other. When the determination is affirmative, the transaction platform transmits the payment information to the buyer-end electronic device.

The buyer-end electronic device is further configured to instruct the user of the buyer-end electronic device to input a personal identification number (PIN). When it is determined by the buyer-end electronic device that the PIN thus received is correct, the buyer-end electronic device transmits a confirm signal to the transaction platform.

The transaction platform is further configured to communicate with a bank terminal coupled to the transaction platform to process a payment for the transaction according to the buyer account number and the payment information.

Still another object of the present invention is to provide a buyer-end electronic device that is configured to execute a method for online payment.

Accordingly, a buyer-end electronic device of the present invention is operable to communicate with a transaction platform for processing a payment for a transaction between a user of the buyer-end electronic device and a user of a seller-end electronic device. The buyer-end electronic device is configured to be coupled to a payment card having a personal identification number (PIN) stored therein. The buyer-end electronic device comprises a signal transceiving module configured to communicate with the transaction platform, a display module, and a control module coupled to the signal transceiving module, the display module and the payment card.

When the buyer-end electronic device operates to process the payment for the transaction:
the signal transceiving module is controlled by the control module to transmit a payment authorization signal to the transaction platform, the payment authorization signal including a buyer account number associated with the buyer-end electronic device;
the signal transceiving module is further controlled by the control module to receive, from the transaction platform, payment information associated with the transaction, when it is determined by the transaction platform that the buyer account number is valid;
the display module is controlled by the control module to display the payment information and to instruct the user of the buyer-end electronic device to input a PIN and a verification code that is generated by the transaction platform; and
when it is determined by the control module that the PIN thus received conforms with the PIN stored in the payment card, the signal transceiving module is further controlled by the control module to transmit a confirm signal and the verification code to the transaction platform, such that the transaction platform communicates with a bank terminal to process the payment for the transaction according to the buyer account number and the payment information when the verification code is deemed to be correct.

Yet another object of the present invention is to provide a method for online payment that is to be implemented by the aforementioned buyer-end electronic device.

Accordingly, the method of the present invention comprises the following steps of:
(A) configuring the buyer-end electronic device to transmit a payment authorization signal to the transaction platform, the payment authorization signal including a buyer account number associated with the buyer-end electronic device;
(B) configuring the buyer-end electronic device to receive, from the transaction platform, payment information associated with a transaction between a user of the buyer-end electronic device and a user of a seller-end electronic device, when it is determined by the transaction platform that the buyer account number is valid;
(C) configuring the buyer-end electronic device to display the payment information and to instruct the user of the buyer-end electronic device to input the PIN and a verification code that is generated by the transaction platform; and
(D) when it is determined by the buyer-end electronic device that the PIN thus received conforms with the PIN stored in the payment card, configuring the buyer-end electronic device to transmit a confirm signal and the verification code to the transaction platform, such that the transaction platform communicates with a bank terminal to process a payment for the transaction according to the buyer account number and the payment information when the verification code is deemed to be correct by the transaction platform.

Other features and advantages of the present invention will become apparent in the following detailed description of the preferred embodiment with reference to the accompanying drawings, of which:
Figure 1 is a schematic block diagram of a preferred embodiment of an online payment processing system according to the invention;
Figure 2 is a flowchart of a method for online payment, implemented by the online payment processing system of the invention;
Figure 3 illustrates a collecting interface displayed on a seller-end electronic device of the online payment processing system;
Figure 4 illustrates an authorization interface displayed on a buyer-end electronic device of the online payment processing system;
Figure 5 illustrates a confirmation interface displayed on the buyer-end electronic device;
Figure 6 illustrates a list of unsettled transactions displayed for a buyer;

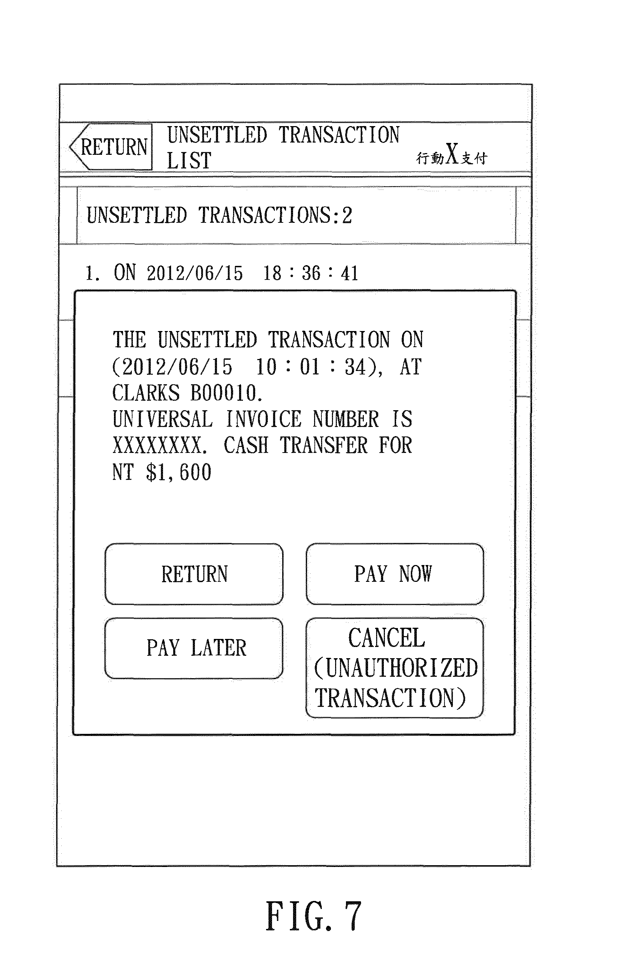

Figure 7 illustrates a particular unsettled transaction of the list illustrated in Figure 6;
Figure 8 illustrates a randomly generated keyboard layout for the buyer to input information therethrough;
Figure 9 illustrates a screen of the buyer-end electronic device instructing the buyer to perform a double check action;
Figure 10 illustrates a screen of the buyer-end electronic device indicating that the double check action is incorrect; and
Figures 11 and 12 illustrate notifying signals generated by a bank terminal and transmitted to a seller-end electronic device and the buyer-end electronic device, respectively.

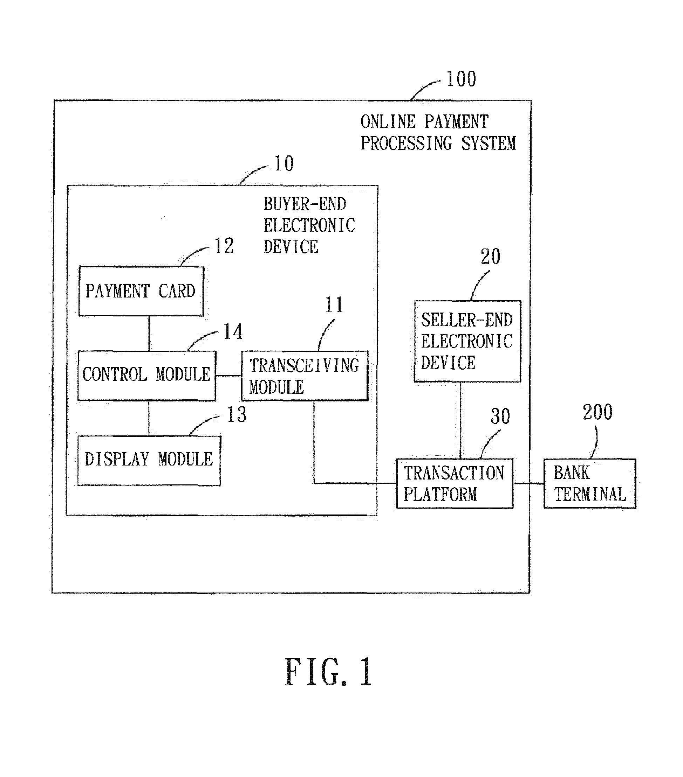

As shown in Figure 1, the preferred embodiment of an online payment processing system 100 according to the present invention is configured to process a payment for an online transaction with a bank terminal 200. The online payment processing system 100 comprises a buyer-end electronic device 10, a seller-end electronic device 20, and a transaction platform 30 coupled to the buyer-end and seller-end electronic devices 10 and 20. In this embodiment, the buyer-end electronic device 10 is a mobile device, and the online payment processing system 100 supports both online transactions and face-to-face transactions.

The buyer-end electronic device 10 is coupled to a payment card 12 having a personal identification number (PIN) stored therein, and includes a signal transceiving module 11, a display module 13, and a control module 14 coupled to the signal transceiving module 11, the display module 13 and the payment card 12.

The signal transceiving module 11 is configured to communicate with the transaction platform 30.

The payment card 12 may be a memory card module selected from a secure digital (SD) card, a mini SD card, amicro SD card, and a compact flash (CF) card, is verified by the bank terminal 200, and is configured to provide the function of conventional plastic money, although various card formats can be employed in other embodiments of this invention. In this embodiment, the payment card 12 has a data chip (not shown in the Figures) that stores the PIN and a virtual account number and that conforms with FISC II standard. The virtual account number is a codename designated by and associated with the user of the buyer-end electronic device 10. In particular, the virtual account number corresponds to a specific bank account that belongs to the user of the buyer-end electronic device 10, and rather than the actual bank account number, the virtual account number is transmitted between the buyer-end electronic device 10 and the bank terminal 200. As such, other than the bank terminal 200, no one is able to extract useful information from the virtual account number, and the actual bank account number can be made relatively more secure.

The display module 13 is configured to provide information regarding the transaction to the user. The control module 14 includes an application for processing the transaction, and is configured to generate control signals to control operation of the signal transceiving module 11 and the display module 13 based on instructions of the application.

The seller-end electronic device 20 is located in a common store (e.g., a department store, a convenience store, etc.) and includes a payment system (e.g. a shopping website server, a point of sale system, etc.) and an application programming interface (API) configured to allow communication with the transaction platform 30.

The transaction platform 30 can be located in a bank or an arbitrary third location to communicate with the buyer-end and seller-end electronic devices 10 and 20.

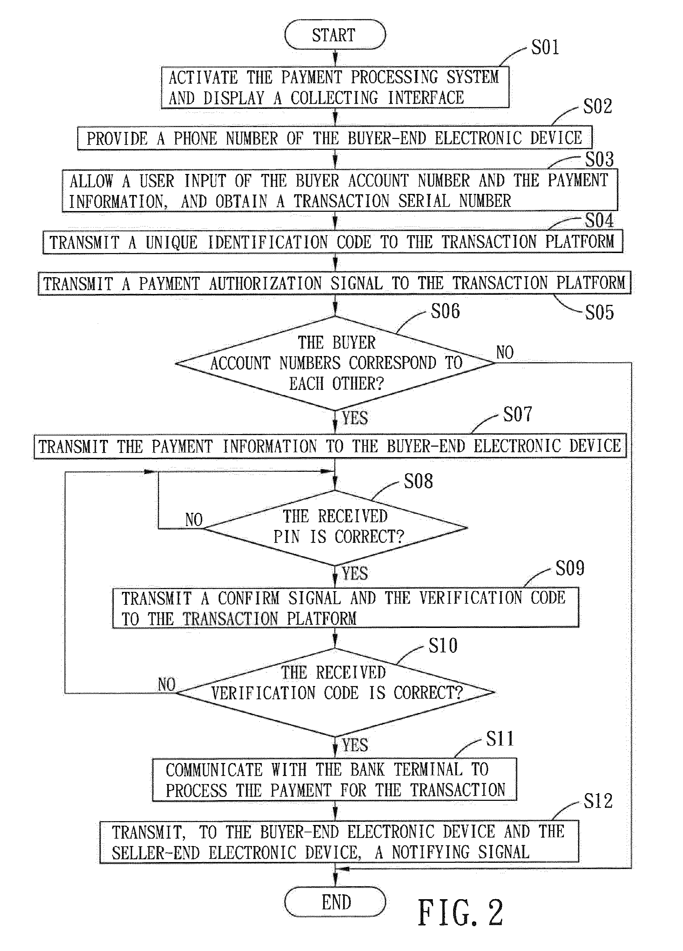

Figure 2 illustrates a method that is for online payment associated with a transaction, and that is implemented by the online payment processing system 100. The method will be executed when the online payment processing system 100 is to process a payment for a transaction between users of the buyer-end and seller-end electronic devices 10 and 20 (i.e., a buyer and a seller, respectively).

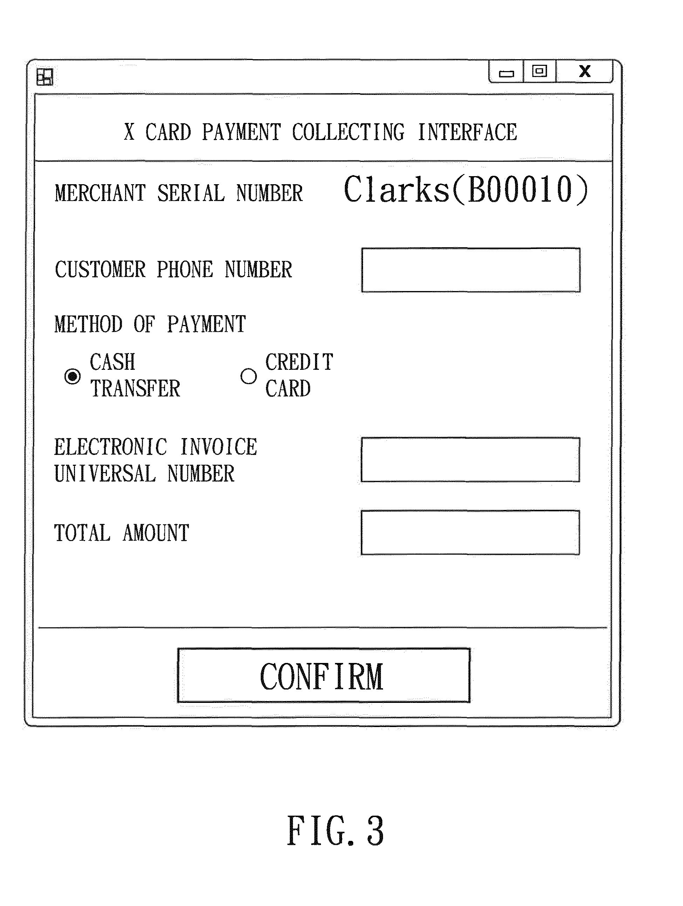

In step S01, the seller executes the API to communicate with the transaction platform 30. The API then activates the online payment processing system 100 and displays a collecting interface. As shown in Figure 3, the collecting interface may include a merchant serial number (store name), and a transaction form including payment information that is associated with the transaction between the users of the buyer-end and seller-end electronic devices 10 and 20, and that is to be provided by the user of the seller-end electronic device 20 (i.e., the seller) . The merchant serial number is designated by the seller, and may have a default value. The payment information includes a buyer account number associated with the buyer-end electronic device 10, the specific method of payment, an electronic invoice uniform number, and a total amount of the payment. The total amount can be manually inputted by the seller, or using a barcode scanner to scan the products involved in the transaction. It is noted that additional relevant information may be incorporated to serve as the payment information in other embodiments of this invention.

In step S02, the buyer provides the seller a phone number of the buyer-end electronic device 10 that serves as the buyer account number. In other embodiments, other relevant information may serve as the buyer account number andmay be provided. For example, the buyer account number may be one of a combination of the phone number and a secure code set by the buyer, and the virtual account number.

In step S03, the seller-end electronic device 20 is operable to receive the buyer account number and the payment information through an input interface (not shown in the Figures), and to generate a transaction serial number, that is associated with the transaction, using the API of the seller-end electronic device 20.

In one example where the transaction is taking place online, the collecting interface can be transmitted to the buyer-end electronic device 10 to be displayed by the display module 13. In such example, the payment information can be provided by the buyer. The seller-end electronic device 20 is also operable to receive the required information and the buyer account number provided by the buyer and transmitted back to the seller-end electronic device 20 via the buyer-end electronic device 10.

In step 504, the seller-end electronic device 20 is operable to generate a unique identification code that is composed of the buyer account number and at least one of the merchant serial number and the transaction serial number, and to transmit the unique identification code to the transaction platform 30. In some examples, the unique identification code is further composed of a seller account number associated with the seller-end electronic device 20.

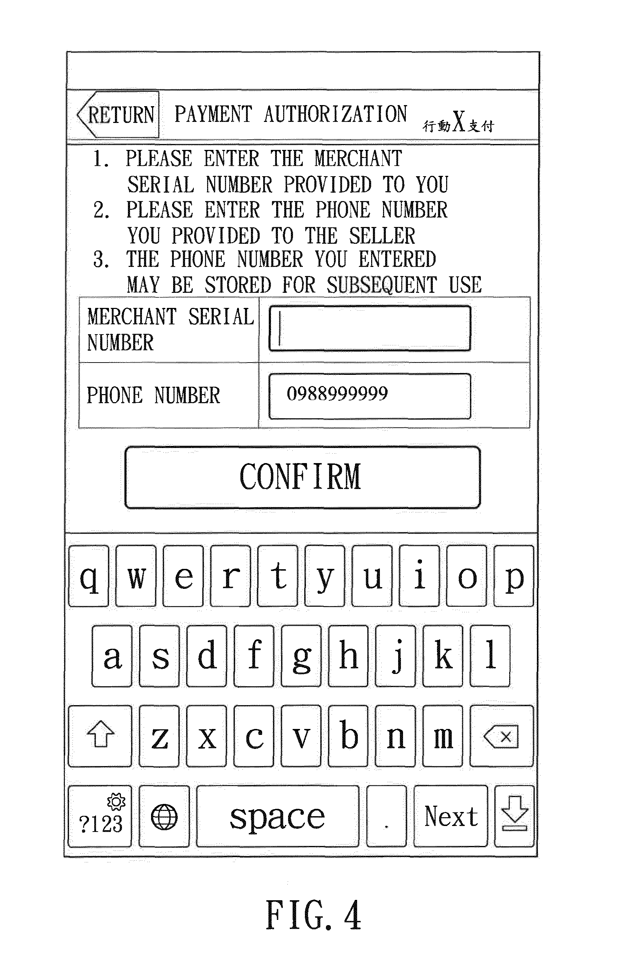

Afterward, in step S05, the buyer-end electronic device 10 is operable to transmit a payment authorization signal to the transaction platform 30. Specifically, the buyer executes the application which in turn generates an authorization interface on the display module 13, as shown in Figure 4. The buyer is then required to input the merchant serial number (provided by the seller) and the buyer account number (in this embodiment, the phone number) . When the numbers (i.e., the merchant serial number and the buyer account number) are inputted and confirmed by the buyer (signaled by the selection of a "confirm" button on the authorization interface), the control module 14 configures the signal transceiving module 11 to transmit the payment authorization signal, that includes the buyer account number and the merchant serial number, to the transaction platform 30.

In some examples, it may not be mandatory to input the merchant serial number. In some examples, the application may offer a function to store the inputted buyer account number in the control module 14 of the buyer-end electronic device 10, such that the buyer does not need to input the buyer account number in subsequent uses. In some examples, when the buyer is in possession of multiple credit cards and/or debit cards, the application may offer a function to store multiple corresponding buyer account numbers in the control module 14 to allow the buyer to select one of the multiple credit cards and/or debit cards.

In step S06, the transaction platform 30 is operable to determine whether the buyer account numbers, which are received respectively from the seller-end electronic device 20 in step S04 and from the buyer-end electronic device 10 in step S05, correspond to each other (e.g., identical to each other). When the buyer account numbers do not correspond, the transaction platform 30 transmits an error message to the buyer-end and seller-end electronic devices 10 and 20, and the method is thus terminated.

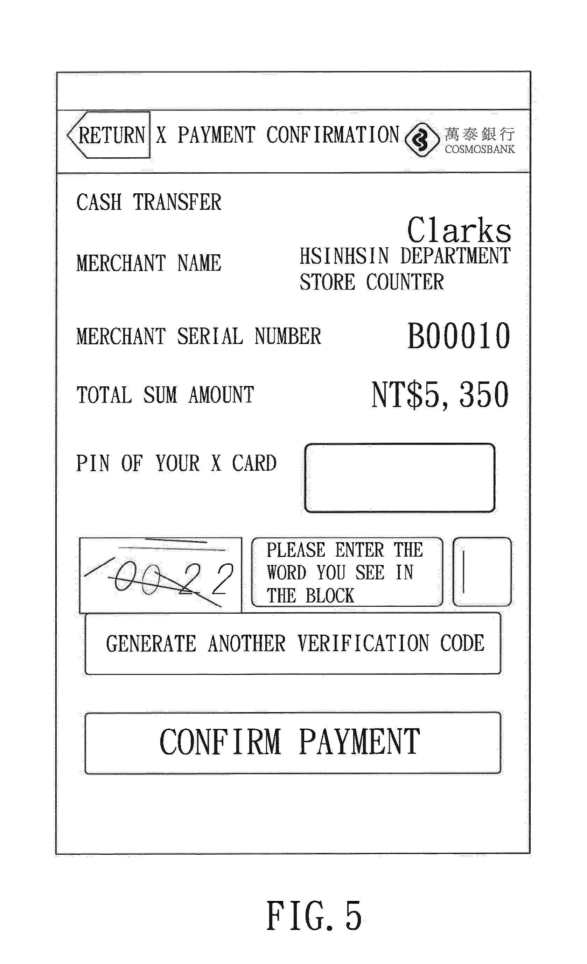

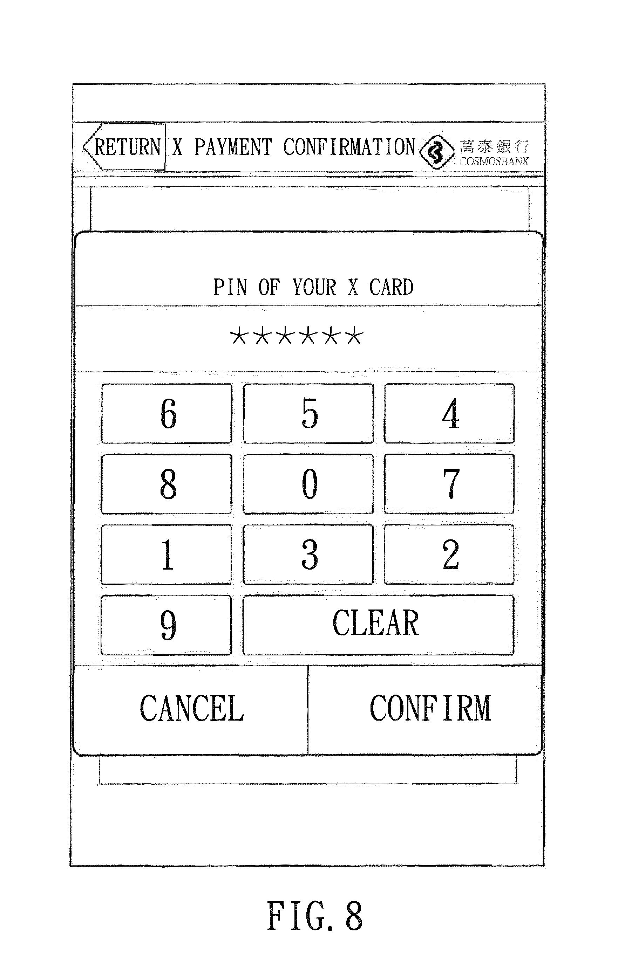

When the detormination made in step S06 is affirmative, the flow proceeds to step S07, in which the transaction platform 30 is operable to transmit the payment information to the buyer-end electronic device 10, allowing the display module 13 to display a confirmation interface to the buyer. As shown in Figure 5, the confirmation interface includes the payment information, and requires the buyer to input a PIN and a verification code that is generated by the transaction platform 30. In this embodiment, the verification code is a completely automated public Turing test to tell computers and humans apart (CAPTCHA). In some examples, the confirmation interface further includes a virtual keyboard displayed on the display module 13. The virtual keyboardmay include a randomly generated keyboard layout (see Figure 8) for security reasons. The keyboard layout may be randomly generated each time the buyer touches a key for further enhancing security.

In some examples, the confirmation interface is provided with a verification code regeneration option when the verification code is unreadable to the buyer.

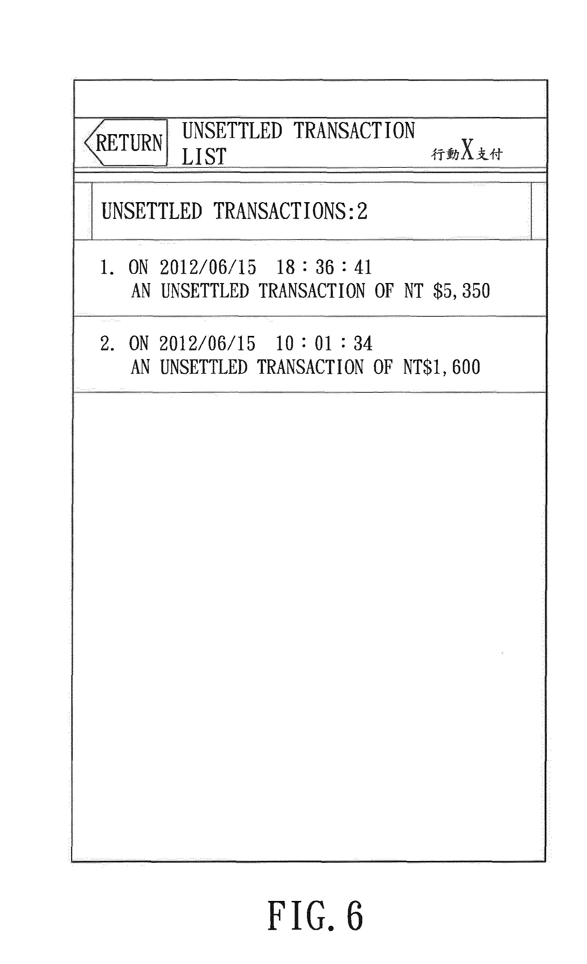

In some examples, there may be multiple unsettled (or unpaid) transactions associated with the buyer. The unsettled transactions may be listed on the display module 13 (see Figure 6 for an example). When the buyer selects one of the unsettled transactions, the display module 13 is configured to display the details regarding the selected one of the unsettled transactions, including time and place of the transaction and the payment information, and options for the buyer to "pay now", "pay later", or "cancel" the payment when the transaction is not authorized by the buyer. If a malicious third party obtains the buyer account number, the buyer account number of the buyer-end electronic device 10 may in turn being unknowingly used as the buyer account number by the third party. Therefore, when the buyer-end electronic device 10 receives the details of the unsettled transaction, the buyer is able to decide whether such transaction is authorized by himself. If so, the buyer can select "pay now" to settle the payment for the transaction.

Otherwise, the buyer can select "cancel" such that the control module 14 configures the signal transceiving module 11 to transmit an alert signal to the transaction platform 30 and subsequently to the seller-end electronic device 20, notifying the unauthorized transaction.

In step S08, the control module 14 of the buyer-end electronic device 10 is operable to determine whether the PIN received in step S07 is correct (i.e., conforms with the PIN stored in the payment card 12). If the PIN is not correct, the control module 14 controls the display module 13 to display an invalid PIN message, and step S07 is repeated. In some examples, when an incorrect PIN is inputted a number of times in succession, the method is terminated.

When the PIN received in step S07 is correct, the flow proceeds to step S09, in which the control module 14 controls the signal transceiving module 11 to transmit a confirm signal and the verification code to the transaction platform 30. It is noted that the PIN is stored in the payment card 12, and is not transmitted across the devices of the online payment processing system 100. Accordingly, the third party is not able to intercept the PIN in the data transmission, and after the payment card 12 is detached from the buyer-end electronic device 10, the PIN is not retrievable from the buyer-end electronic device 10 as well.

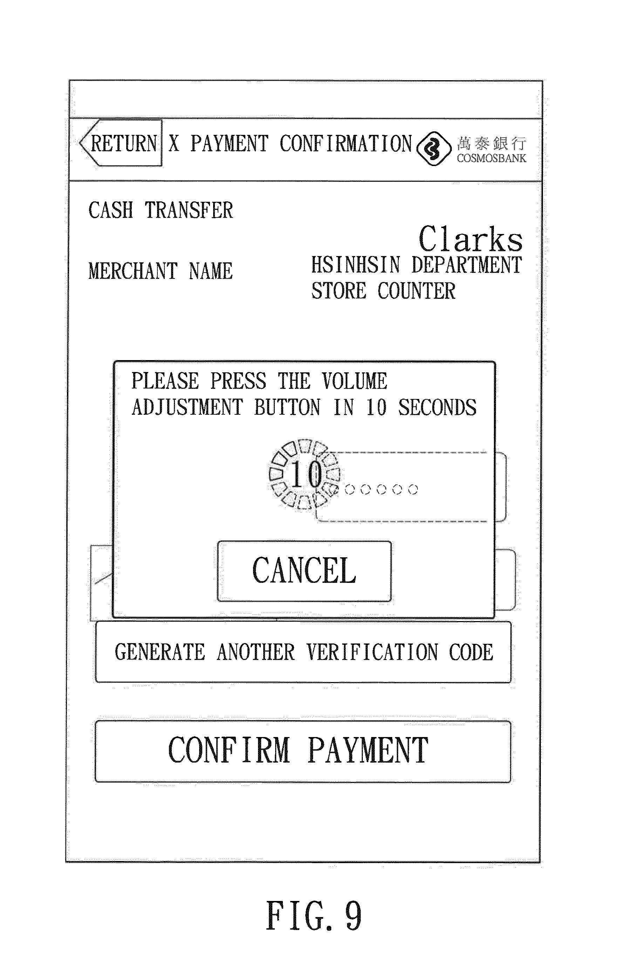

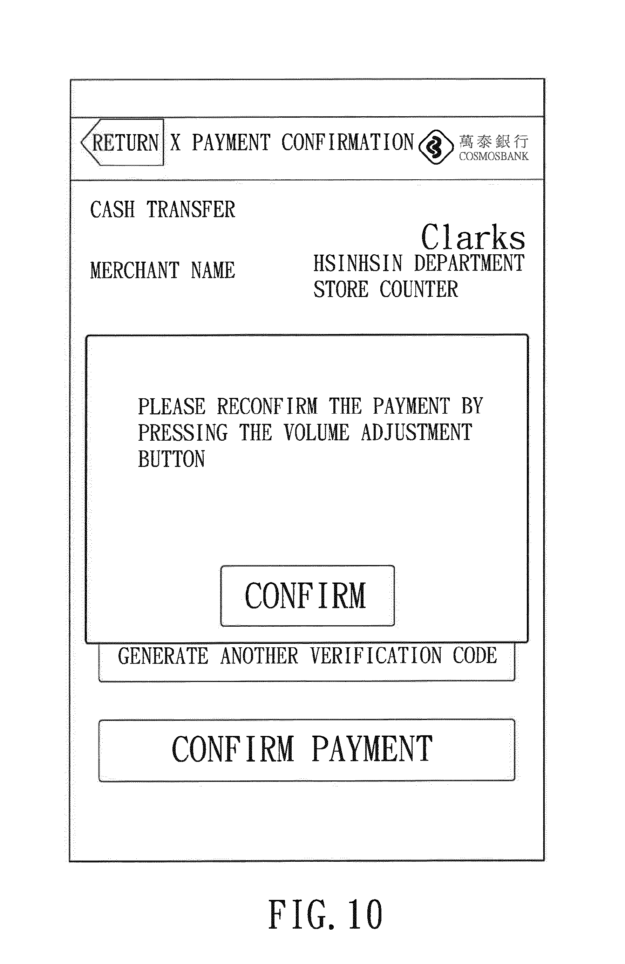

In some examples, the buyer-end electronic device 10 asks the buyer for a double check before transmitting the confirm signal and the verification code. This can be done by configuring the display module 13 to display a message instructing the buyer to perform a double check action. For example, as shown in Figure 9, the buyer is instructed to press a volume adjustment button on the buyer-end electronic device 10 within a predetermined time (e.g., 10 seconds) so as to confirm transmission of the confirm signal. When the double check action is performed as instructed, the buyer-end electronic device 10 transmits the confirm signal and the verification code. Otherwise, the buyer is informed that the double check is incomplete (see Figure 10), and is required to perform the double check action correctly.

In step S10, the transaction platform 30 is operable to determine whether the verification code received in step S09 is correct, and to execute step S11 when the determination is affirmative. Otherwise, the flow goes back to step S07 to instruct the buyer to input the verification code again.

In step S11, the transaction platform 30 is operable to communicate with the bank terminal 200 to process the payment for the transaction according to the unique identification code (composed of the buyer account number, at least one of the merchant serial number and the transaction serial number, and the seller account number).

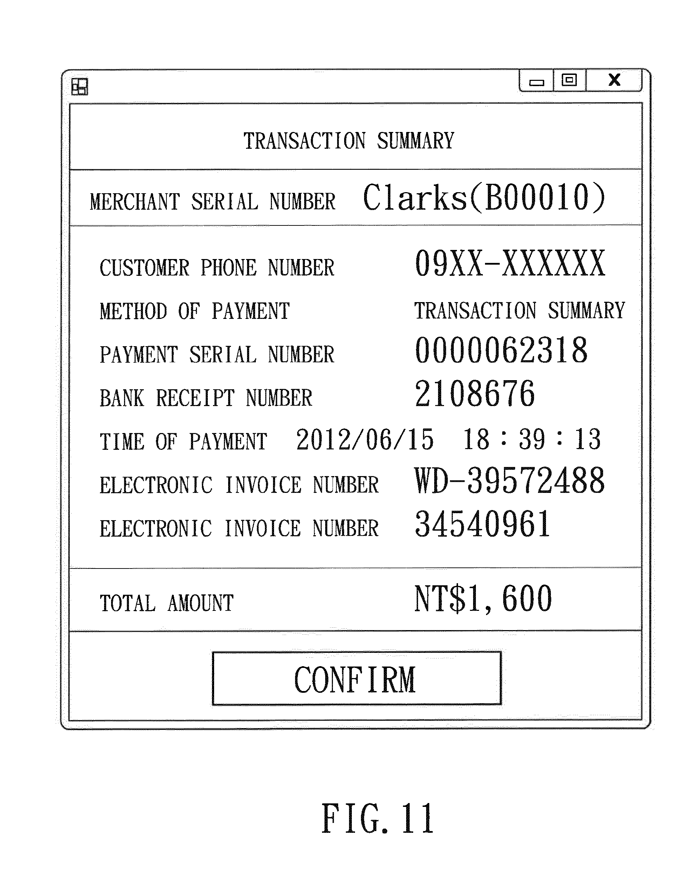

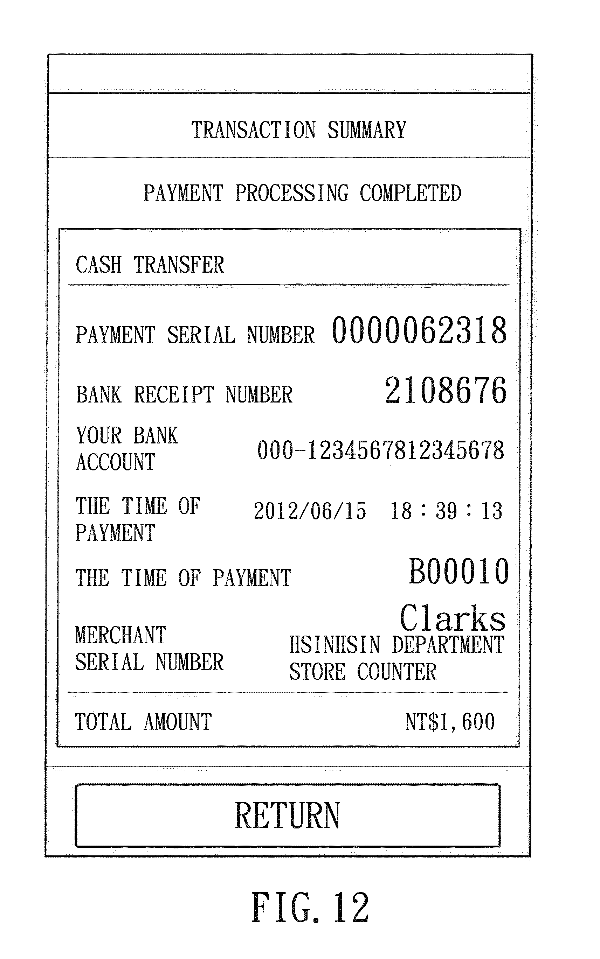

Subsequently, in step S12, when the payment is successfully processed, the transaction platform 30 is configured to transmit, to the buyer-end electronic device 10 and the seller-end electronic device 20, a notifying signal notifying that the payment has been processed. Exemplary notifying signals transmitted to the seller-end electronic device 20 and the buyer-end electronic device 10 can be those shown in Figures 11 and 12, respectively.

For the seller-end electronic device 20, the notifying signal may include the merchant serial number, the buyer account number, the payment information (the specific method of payment, the electronic invoice uniform number, and the total amount of the payment), a payment serial number, a bank receipt number, time of the payment, and an invoice number. For the buyer-end electronic device 10, the notifying signal may include the payment serial number, the bank receipt number, a bank account of the buyer associated with the payment, time of the payment, the merchant serial number, and the total amount. Additional relevant information may be included in the notifying signals in other embodiments of this invention.

In brief, the method according to embodiments of this invention is applicable in face-to-face or online transactions, and the buyer is operating the steps of the method that are relative to the payment using the buyer-end electronic device 10, instead of the seller using the seller-end electronic device 20. Moreover, since the method does not involve a card reader and the credit card and/or the debit card of the buyer, related security risks can be significantly reduced.

The method further informs the buyer of the details regarding the payment, and allows the buyer to confirm the payment using the buyer-end electronic device 10 before processing. As a result, each payment processed using the method is authorized by the buyer, and cannot be launched by a malicious third party that is not in possession of the buyer-end electronic device 10. Therefore, the method provides enhanced security.

During the transaction, the virtual account number is transmitted in place of the actual bank account number of the buyer, and the correspondence of the virtual account number and the actual bank account number is only known to the buyer and the bank terminal 200. Therefore, even though the virtual account number is exposed to threat for being intercepted by a third party, personal information of the buyer is still made relatively secure.

In some embodiments, the online payment processing system 100 may comprise a plurality of the seller-end electronic devices 20, and a central server that is coupled to the seller-end electronic devices 20. Data transmission between the seller-end electronic devices 20 and the transaction platform 30 can be processed through the central server. Such an online payment processing system 100 is applicable in larger stores (e.g., a warehouse store, a wholesale store, etc.).

In some embodiments, the seller-end electronic device 20 may be a mobile device. As such, the unique identification code composed in step S04 may further include a seller account number that is associated with the seller-end electronic device 20 (e.g., the phone number of the seller-end electronic device 20).

To sum up, embodiments of this invention employ a payment card 12 that has the PIN and the virtual account number stored therein. As a result, during the payment, personal information of the buyer is not transmitted between the devices of the online payment processing system 100. This may provide enhanced security for the payment. Moreover, since no physical card is involved in the transaction, the seller does not need to prepare an additional card reader for implementing the method of this invention.

## Claims

1. A method for online payment, to be implemented by an online payment processing system (100) including a buyer-end electronic device (10), a seller-end electronic device (20) and a transaction platform (30) coupled to the buyer-end electronic device (10), the seller-end electronic device (20) and a bank terminal (200), said method being **characterized by** the following steps of:
(a) configuring the seller-end electronic device (20) to receive a buyer account number associated with the buyer-end electronic device (10) and payment information associated with a transaction between users of the buyer-end and seller-end electronic devices (10, 20);
(b) configuring the seller-end electronic device (20) to transmit the payment information and the buyer account number to the transaction platform (30);
(c) configuring the buyer-end electronic device (10) to transmit a payment authorization signal to the transaction platform (30), the payment authorization signal including the buyer account number;
(d) when it is determined by the transaction platform (30) that the buyer account numbers, which are received respectively from the seller-end electronic device (20) in step (b) and from the buyer-end electronic device (10) in step (c), correspond to each other, configuring the transaction platform (30) to transmit the payment information to the buyer-end electronic device (10);
(e) configuring the buyer-end electronic device (10) to instruct the user of the buyer-end electronic device (10) to input a personal identification number (PIN);
(f) configuring the buyer-end electronic device (10) to transmit a confirm signal to the transaction platform (30) when it is determined by the buyer-end electronic device (10) that the PIN received in step (e) is correct; and
(g) configuring the transaction platform (30) to communicate with the bank terminal (200) to process a payment for the transaction according to the buyer account number and the payment information.

2. The method of Claim 1, further **characterized by**, after step (g), the following step of:
when the payment is successfully processed, configuring the transaction platform (30) to transmit to the buyer-end electronic device (10) and the seller-end electronic device (20) a notifying signal notifying that the payment has been processed.

3. The method of any one of Claims 1 and 2, **characterized in that**:
in step (e), the buyer-end electronic device (10) is further configured to instruct the user of the buyer-end electronic device (10) to input a verification code that is generated by the transaction platform (30) and that is displayed by the buyer-end electronic device (10);
in step (f), the buyer-end electronic device (10) is further configured to transmit the verification code received in step (e) to the transaction platform (30); and
said method further comprises, between steps (f) and (g), the step of configuring the transaction platform (30) to determine whether the verification code is correct, and to execute step (g) when the determination is affirmative.

4. The method of any one of Claims 1 to 3, **characterized in that**, in step (b), the seller-end electronic device (20) is further configured to:
obtain at least one of a merchant serial number associated with the user of the seller-end electronic device (20) and a transaction serial number associated with the transaction;
generate a unique identification code that is composed of the buyer account number and said at least one of the merchant serial number and the transaction serial number; and
transmit the unique identification code to the transaction platform (30).

5. The method of Claim 4, **characterized in that** the unique identification code is further composed of a seller account number associated with the seller-end electronic device (20).

6. The method of any one of Claims 1 to 5, **characterized in that** the payment authorization signal further includes a merchant serial number associated with the user of the seller-end electronic device (20).

7. The method of any one of Claims 1 to 6, **characterized in that** the buyer account number is one of:
a phone number associated with the buyer-end electronic device (10);
a combination of the phone number and a secure code set by the user of the buyer-end electronic device (10) ; and
a virtual account number associated with the user of the buyer-end electronic device (10).

8. An online payment processing system (100) configured to process a payment for an online transaction, said online payment processing system (100) being **characterized by**:
a buyer-end electronic device (10);
a seller-end electronic device (20); and
a transaction platform (30) coupled to said buyer-end and seller-end electronic devices (10, 20);
said online payment processing system (100) being further **characterized in that**:
said seller-end electronic device (20) is configured to receive a buyer account number associated with the buyer-end electronic device (10) and payment information associated with a transaction between users of said buyer-end and seller-end electronic devices (10, 20), and to transmit the payment information and the buyer account number to said transaction platform (30) ;
said buyer-end electronic device (10) is configured to transmit a payment authorization signal that includes the buyer account number to said transaction platform (30);
said transaction platform (30) is configured to determine whether the buyer account numbers, which are received respectively from said seller-end electronic device (20) and said buyer-end electronic device (10), correspond to each other, and to transmit the payment information to said buyer-end electronic device (10) when the determination is affirmative;
said buyer-end electronic device (10) is configured to instruct the user of said buyer-end electronic device (10) to input a personal identification number (PIN), and to transmit a confirm signal to said transaction platform (30) when it is determined by said buyer-end electronic device (10) that the received PIN is correct; and
said transaction platform (30) is configured to communicate with a bank terminal (200) coupled to said transaction platform (30) to process a payment for the transaction according to the buyer account number and the payment information.

9. The online payment processing system (100) of Claim 8, **characterized in that** when the payment is successfully processed, said transaction platform (30) is further configured to transmit to said buyer-end electronic device (10) and said seller-end electronic device (20) a notifying signal notifying that the payment has been processed.

10. The online payment processing system (100) of any one of Claims 8 and 9, **characterized in that** said buyer-end electronic device (10) determines whether the received PIN is correct by comparing the received PIN with a reference PIN stored in said buyer-end electronic device (10).

11. The online payment processing system (100) of any one of Claims 8 to 10, **characterized in that**:
said buyer-end electronic device (10) is further configured to instruct the user of said buyer-end electronic device (10) to input a verification code that is generated by said transaction platform (30) and that is displayed by said buyer-end electronic device (10), and to transmit the verification code thus received to said transaction platform (30); and
said transaction platform (30) is further configured to determine whether the verification code is correct, and to communicate with the bank terminal (200) to process the payment for the transaction when the determination is affirmative.

12. The online payment processing system (100) of any one of Claims 8 to 11, **characterized in that** said seller-end electronic device (20) is further configured to:
obtain at least one of a merchant serial number associated with the user of said seller-end electronic device (20) and a transaction serial number associated with the transaction;
generate a unique identification code that is composed of the buyer account number and said at least one of the merchant serial number and the transaction serial number; and
transmit the unique identification code to said transaction platform (30).

13. The online payment processing system (100) of any one of Claims 8 to 12, **characterized in that** said buyer-end electronic device (10) is a mobile device.

14. The online payment processing system (100) of any one of Claims 8 to 13, **characterized in that** said seller-end electronic device (10) is a mobile device.

15. The online payment processing system (100) of any one of Claims 8 to 14, **characterized in that** the buyer account number is one of:
a phone number associated with said buyer-end electronic device (10);
the combination of the phone number and a secure code; and
a virtual account number associated with the user of said buyer-end electronic device (10).

16. A buyer-end electronic device (10) operable to communicate with a transaction platform (30) for processing a payment for a transaction between a user of said buyer-end electronic device (10) and a user of a seller-end electronic device (20), said buyer-end electronic device (10) being configured to be coupled to a payment card having a personal identification number (PIN) stored therein, said buyer-end electronic device (10) being **characterized by** a signal transceiving module (11) configured to communicate with the transaction platform (30), a displaymodule (12), and a control module (13) coupled to said signal transceiving module (11), said display module (12) and the payment card,
said buyer-end electronic device (10) being further **characterized in that**, when said buyer-end electronic device (10) operates to process the payment for the transaction:
said signal transceiving module (11) is controlled by said control module (13) to transmit a payment authorization signal to the transaction platform (30), the payment authorization signal including a buyer account number associated with said buyer-end electronic device (10);
said signal transceiving module (11) is further controlled by said control module (13) to receive, from the transaction platform (30), payment information associated with the transaction, when it is determined by the transaction platform (30) that the buyer account number is valid;
said display module (12) is controlled by said control module (13) to display the payment information and to instruct the user of said buyer-end electronic device (10) to input a PIN and a verification code that is generated by the transaction platform (30); and
when it is determined by said control module (13) that the PIN thus received conforms with the PIN stored in the payment card, said signal transceiving module (11) is further controlled by said control module (13) to transmit a confirm signal and the verification code to the transaction platform (30), such that the transaction platform (30) communicates with a bank terminal (200) to process the payment for the transaction according to the buyer account number and the payment information when the verification code is deemed to be correct.

17. The buyer-end electronic device (10) of Claim 16, **characterized in that** the buyer account number is one of:
a phone number associated with said buyer-end electronic device (10);
the combination of the phone number and a secure code; and
a virtual account number associated with the user of said buyer-end electronic device (10).

18. A method for online payment, to be implemented by a buyer-end electronic device (10) that is capable of communicating with a transaction platform (30), and that is configured to be connected to a payment card having a personal identification number (PIN) stored therein, said method being **characterized by** the following steps of:
(A) configuring the buyer-end electronic device (10) to transmit a payment authorization signal to the transaction platform (30), the payment authorization signal including a buyer account number associated with the buyer-end electronic device (10);
(B) configuring the buyer-end electronic device (10) to receive, from the transaction platform (30), payment information associated with a transaction between a user of the buyer-end electronic device (10) and a user of a seller-end electronic device (20), when it is determined by the transaction platform (30) that the buyer account number is valid;
(C) configuring the buyer-end electronic device (10) to display the payment information and to instruct the user of the buyer-end electronic device (10) to input a PIN and a verification code that is generated by the transaction platform (30); and
(D) when it is determined by the buyer-end electronic device (10) that the PIN thus received conforms with the PIN stored in the payment card, configuring the buyer-end electronic device (10) to transmit a confirm signal and the verification code to the transaction platform (30), such that the transaction platform (30) communicates with a bank terminal (200) to process a payment for the transaction according to the buyer account number and the payment information when the verification code is deemed to be correct by the transaction platform (30).

19. The method of Claim 18, **characterized in that** the buyer account number is one of:
a phone number associated with the buyer-end electronic device (10);
the combination of the phone number and a secure code; and
a virtual account number associated with the user of the buyer-end mobile device.
